(19) Europäisches Patentamt
European Patent Office
Office européen des brevets

(11) **EP 3 115 826 A1**

(12) **EUROPÄISCHE PATENTANMELDUNG**

(43) Veröffentlichungstag:
**11.01.2017 Patentblatt 2017/02**

(51) Int Cl.:
***G02B 26/08*** (2006.01)   ***G02B 7/182*** (2006.01)

(21) Anmeldenummer: **15175387.8**

(22) Anmeldetag: **06.07.2015**

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**
Benannte Validierungsstaaten:
**MA**

(71) Anmelder: **Trumpf Laser Marking Systems AG 7214 Grüsch (CH)**

(72) Erfinder: **Dr. Jutzi, Fabio 7000 Chur (CH)**

(74) Vertreter: **Kohler Schmid Möbus Patentanwälte Partnerschaftsgesellschaft mbB Ruppmannstraße 27 70565 Stuttgart (DE)**

(54) **VORRICHTUNG ZUR ABLENKUNG EINES LASERSTRAHLS**

(57)    Eine Vorrichtung (1) zur Ablenkung eines Laserstrahls mit einem Spiegel (2), mit einem Rahmen (6), mit dem der Spiegel (2) schwenkbar verbunden ist, mit einem Permanentmagneten (8), der starr mit dem Spiegel (2) verbunden ist und dessen Nord- und Südpol eine Magnetachse (9) definieren, und mit mindestens einer Spule (10; 10'; 14; 14') zur Ausübung einer magnetischen Auslenkkraft auf den Permanentmagneten (8), die eine Wickelachse (12; 13) aufweist, um die die Spulenwindungen gewickelt sind, wobei die Spule (10; 10'; 14; 14') starr mit dem Rahmen (6) verbunden und der Permanentmagnet (8) im Magnetfeld der Spule (10; 10'; 14; 14') angeordnet ist, ist dadurch gekennzeichnet, dass die Magnetachse (9) und die Wickelachse (12; 13) der Spule (10; 10'; 14; 14') nicht parallel verlaufen, die Höhe (H) des Querschnitts des Permanentmagneten (8) kleiner oder gleich der doppelten Höhe (h) des Spulenquerschnitts ist und sich die Querschnitte von Permanentmagnet (8) und Spule (10; 10'; 14; 14') zumindest teilweise überlappen.

Fig. 1

EP 3 115 826 A1

**Beschreibung**

Die Erfindung betrifft eine Vorrichtung zur Ablenkung eines Laserstrahls mit einem Spiegel, mit einem Rahmen, in dem der Spiegel schwenkbar gelagert ist, mit einem Permanentmagneten, der starr mit dem Spiegel verbunden ist und dessen Nord- und Südpol eine Magnetachse definieren, und mit mindestens einer Spule zur Ausübung einer magnetisch Auslenkkraft auf den Permanentmagneten, die eine Wickelachse aufweist, um die die Spulenwindungen gewickelt sind, wobei die Spule starr mit dem Rahmen verbunden und der Permanentmagnet im Magnetfeld der Spule angeordnet ist.

Eine derartige Vorrichtung zur Ablenkung eines Laserstrahls auf Basis einer MEMS-Technologie mit elektromagnetischen Aktuatoren ist z.B. aus Ataman et al., J. Micromech. Microeng. 23 (2013) 025002 (13pp) oder aus T. Iseki et al., OPTICAL REVIEW Vol. 13, No. 4 (2006) 189-194 bekannt.

Vorrichtungen zur Ablenkung eines Laserstrahls, insbesondere in Anordnungen zur Lasermaterialbearbeitung, sollen eine hohe Dynamik bezüglich Winkelgeschwindigkeit und Winkelbeschleunigung sowie eine hohe Genauigkeit bezüglich Winkeleinstellung und Wiederholbarkeit bieten. Gleichzeitig werden die verwendeten Laserstrahlen stetig leistungsstärker und die Bauräume immer kleiner. Eine interessante Technologie bieten hier Scanner auf Basis von MEMS (Microelectro mechanical systems) und insbesondere Vorrichtungen, die auf elektromagnetischen Aktuatoren beruhen.

Ataman et al. beschreiben einen MEMS-Scanner, in dem die Spulen des Aktuators als Flachspulen ausgebildet sind.

Iseki et al. beschreiben einen kardanisch aufgehängten Ablenkspiegel, dessen elektromagnetischer Aktuator auf der Wechselwirkung eines Permanentmagneten mit Spulenanordnungen beruht.

Jedoch sind bei diesen bekannten Ablenkvorrichtungen die erreichbaren Winkelbeschleunigungen und Winkelgeschwindigkeiten nicht hoch genug, um in Anwendungen zur Laserbearbeitung wirtschaftliche Bearbeitungsgeschwindigkeiten zu erreichen. Dies gilt insbesondere, wenn die Bearbeitung nicht nur eine konstante Winkelgeschwindigkeit des Spiegels, sondern den schnellen Wechsel zwischen verschiedenen Winkelgeschwindigkeiten erfordert. Die Einstell- und Wiederholgenauigkeit der Laserstrahlablenkung bestimmt maßgeblich die Qualität des Bearbeitungsergebnisses und damit die Prozesssicherheit des Bearbeitungsprozesses. Auch hier erfüllen die bekannten Konzepte die Anforderungen für einen industriellen Einsatz nicht.

Daher ist es die Aufgabe der vorliegenden Erfindung, eine Vorrichtung der eingangs genannten Art dahingehend weiterzubilden, dass die Dynamik bezüglich

Winkelgeschwindigkeit und Winkelbeschleunigung erhöht sowie die Genauigkeit bezüglich Winkeleinstellung und Wiederholbarkeit verbessert werden.

Diese Aufgabe wird erfindungsgemäß dadurch gelöst, dass in der eingangs genannten Vorrichtung die Magnetachse und die Wickelachse der Spule nicht parallel verlaufen, die Höhe des Querschnitts des Permanentmagneten kleiner oder gleich der doppelten Höhe des Spulenquerschnitts ist und sich die Querschnitte der Spule und des Permanentmagneten zumindest teilweise überlappen.

Wird die eingangs erwähnte Spule von Strom durchflossen, erzeugt sie ein Magnetfeld B, das nah an der Stirnfläche einen Bereich hoher Feldstärke besitzt, in dem die Feldlinien parallel zur Spulenachse gerichtet sind. Weiter entfernt von der Spulenstirnfläche ändern die Feldlinien ihre Richtung und die Feldstärke sinkt. Für das Drehmoment $\vec{T}$, das an einem Magneten mit dem magnetischen Moment $\vec{m}$ in einem homogenen Magnetfeld angreift, gilt:

$$\vec{T} = \vec{m} \times \vec{B} \quad \text{und} \quad \left|\vec{T}\right| = \left|\vec{m} \times \vec{B}\right| = \left|\vec{m}\right|\left|\vec{B}\right| \sin\theta,$$

wobei $\theta$ den Winkel zwischen den beiden Vektoren bezeichnet. Bevorzugt wird nun der Permanentmagnet in dem Bereich hoher Feldstärke angeordnet, so dass die Querschnitte der Spule und des Permanentmagneten zumindest teilweise überlappen. Dabei ist darauf zu achten, dass die Magnetachse und die Wickelachse der Spule nicht parallel verlaufen. Dann sind $\vec{m}$ und $\vec{B}$ ebenfalls nicht parallel und $\sin\theta \neq 0$.

Permanentmagneten bestehen beispielsweise aus SmCo oder NdFeB. Derartige Materialien besitzen eine hohe Dichte. Um das Trägheitsmoment der beweglichen Teile der Vorrichtung gering zu halten, wird das Volumen des Permanentmagneten vorteilhaft auf den Bereich konzentriert, in dem das magnetische Moment des Permanentmagneten mit einem signifikanten äußeren Magnetfeld wechselwirken kann. Dies wird erfindungsgemäß dadurch erreicht, dass die Höhe des Querschnitts des Permanentmagneten auf die doppelte Höhe des Spulenquerschnitts begrenzt wird und dass der Permanentmagnet im Magnetfeld der Spule so angeordnet ist, dass sich die Querschnitte der Spule und des Permanentmagneten zumindest teilweise überlappen.

Zu einer hohen Dynamik der erfindungsgemäßen Ablenkvorrichtung kann eine hohe Kraft bzw. ein hohes Drehmoment der Aktuation beitragen. Weiterhin ist ein geringes Trägheitsmoment der bewegten Teile vorteilhaft.

Bevorzugt schneiden sich die Magnetachse und die Wickelachse und schließen einen von Null verschiedenen Winkel miteinander ein. In diesem Fall spielt sich die Dynamik in der vom magnetischen Moment und der Spulenachse aufgespannten Ebene ab, und die erfindungsgemäße Ablenkvorrichtung weist damit positive Eigenschaften zur Ansteuerung auf. Besonders bevorzugt beträgt der von Null verschiedene Winkel 90°. In diesem Spezialfall ist der Betrag des Drehmomentes, das auf den Magneten wirkt, wenn die Spule von Strom durchflossen wird, maximal.

Vorzugsweise ist die Höhe des Querschnitts des Permanentmagneten größer oder gleich 0,9-mal und kleiner oder gleich 1,1-mal der Höhe des Spulenquerschnitts, insbesondere gleich der Höhe des Spulenquerschnitts. Diese Konfiguration erlaubt den größtmöglichen Überlapp der Querschnitte des Permanentmagneten und der mindestens einen Spule.

Ebenfalls bevorzugt ist die Höhe des Querschnitts des Permanentmagneten kleiner als die Höhe des Spulenquerschnitts. Dies erlaubt eine optimierte Positionierung des Permanentmagneten in dem Bereich hoher Feldstärke, ohne dass der Überlapp der Querschnitte der Spule und des Permanentmagneten sich verringert.

Der Überlapp der Querschnitte von Permanentmagneten und Spule beeinflusst die Größe des Drehmomentes, das auf den Permanentmagneten im Magnetfeld der Spule wirkt. Daher ist der Höhenüberlapp der Querschnitte der Spule und des Permanentmagneten vorzugsweise größer als oder gleich 50% der kleineren der beiden Höhen. Insbesondere bevorzugt ist der Höhenüberlapp der Querschnitte der Spule und des Permanentmagneten gleich 100% der kleineren der beiden Höhen.

Aus dem Vorhergehenden ist ersichtlich, dass eine geeignete Positionierung des Permanentmagneten im Magnetfeld der Spule eine wichtige Rolle für die Größe des erzeugbaren Drehmomentes und damit für die erreichbare Winkelbeschleunigung und Winkelgeschwindigkeit bei der Ablenkung eines Laserstrahls spielt. Ebenso ist ersichtlich, dass bei der Wahl der Abmessungen des Permanentmagneten die Auswirkungen auf die träge Masse der beweglichen Teile der Vorrichtung berücksichtigt werden müssen. Daher ist bevorzugt zwischen dem Permanentmagneten und dem Verbindungselement, durch das der Spiegel im Rahmen schwenkbar gelagert ist, ein Abstandshalter aus nichtferromagnetischem Material angeordnet, über dessen Länge der Abstand zwischen dem Mittelpunkt des Permanentmagneten und der Wickelachse der mindestens einen Spule definiert werden kann.

Vorzugsweise umfasst die Vorrichtung mehrere Spulen mit jeweils einer Wickelachse. Die Wickelachsen der Spulen können beispielsweise nicht kollinear sein, so dass Kräfte aus verschiedenen Richtungen auf den Permanentmagneten einwirken können und der Spiegel in mehr als einer Richtung schwenkbar ist.

Vorzugsweise sind auf einer Wickelachse mindestens zwei Spulen mit gleichsinniger Wicklungsrichtung vorgesehen und der Permanentmagnet ist zwischen den mindestens zwei Spulen angeordnet. In diesem Fall können sowohl attraktive wie auch repulsive Kräfte zum Drehmoment beitragen.

Bevorzugt umfasst die Vorrichtung zwei Wickelachsen mit Spulen, die zueinander und zu der Magnetachse senkrecht stehen. Eine solche Ausführungsform ist bezüglich einer einfachen Ansteuerung bei einer Auslenkung des Spiegels um verschiedene Schwenkachsen besonders vorteilhaft.

Die Kraft, die eine stromdurchflossene Spule auf einen Permanentmagneten in ihrem Magnetfeld ausüben kann, steigt mit der Induktivität L der Spule. Die Induktivität einer Spule lässt sich dadurch erhöhen, dass in die Spule ein Kern eines ferromagnetischen Materials eingebracht wird. Wird an eine Spule eine Spannung angelegt, stellt sich der Strom in der Spule aufgrund einer entgegen gerichteten Induktionsspannung erst allmählich ein, wobei die Zeitkonstante mit der Induktivität der Spule steigt. Demzufolge hat eine höhere Induktivität der mindestens einen Spule eine trägere Reaktion der Vorrichtung zur Ablenkung eines Laserstrahls auf eine Änderung des Vorgabesignals zur Folge und wirkt sich somit negativ auf die erreichbare Ablenkgeschwindigkeit und Winkelbeschleunigung aus. Eine Erhöhung der Induktivität über die Einführung eines ferromagnetischen Spulenkerns führt darüber hinaus zu zusätzlichen Verlusten durch wiederholte Ummagnetisierung des Spulenkerns im zeitlich veränderlichen Feld des sich bewegenden Permanentmagneten. Weiterhin zeigen ferromagnetische Spulenkerne eine nichtlineare Antwort auf eine Änderung der Stromstärke in der Spule bis hin zur Hysterese. Dadurch wird die Genauigkeit der Winkeleinstellung sowie die Wiederholgenauigkeit der Winkeleinstellung in der Vorrichtung zur Strahlablenkung verringert. Bei besonders bevorzugten Ausführungsformen der erfindungsgemäßen Vorrichtung sind durch die Dimensionierung und Anordnung von Permanentmagnet und der mindestens einen Spule die Drehmomente so groß und die Trägheitsmomente so klein, dass für die mindestens eine Spule ein Spulenkern aus nicht ferromagnetischem Material vorgesehen ist und dass die Induktivität der mindestens einen Spule so klein ist, dass mit einer Ansteuerung mit einer einfachen, z.B. linearen, Regelung ausreichende Genauigkeiten erreicht werden.

Unvermeidliche Verlustleistungen während des Betriebs der Ablenkungsvorrichtung entstehen zum Beispiel aufgrund des Ohmschen Widerstands der mindestens einen Spule und führen ohne weitere Maßnahmen zu einer zumindest lokalen Temperaturerhöhung. Eine solche Temperaturerhöhung ist im Sinne einer genauen und wiederholbaren Auslenkung des Spiegels unerwünscht. Daher ist eine Ableitung auftretender Verlustleistung beispielsweise zum Rahmen vorteilhaft. Die mindestens eine Spule ist bevorzugt um einen Spulenkern herum gewickelt, der besonders bevorzugt aus einer Kupferlegierung, einer Aluminiumlegierung, aus Aluminium-Oxid oder aus Aluminium-Nitrid besteht. Diese Materialien haben sehr gute Wärmeleitungseigenschaften. Durch das erfindungsgemäße Merkmal, dass Magnetachse und Wickelachse nicht parallel sind, wird das Auftreten von Wirbelströmen in elektrisch leitfähigen Spulenkernen erheblich reduziert, da die auf den Spulenkern wirkende Magnetfeldstärke wesentlich kleiner ist, als im Fall paralleler Magnetfeld- und Wickelachsen. Dadurch werden Verluste in elektrisch leitfähigen Spulenkernen verringert und die Ansteuerbarkeit der Ablenkungsvorrichtung verbessert, da die Induktion von Wirbelströmen wie eine zusätzliche Dämpfung wirkt. Spulenkerne aus Aluminium-Oxid und Aluminium-Nitrid sind insbesondere vorteilhaft, da in ihnen keine Verluste durch Wirbelströme induziert werden.

Um einer Deformation des Spiegels bei einer Temperaturerhöhung entgegenzuwirken, ist der Spiegel bevorzugt beidseitig mit einer Beschichtung gleicher Dicke versehen. Besonders bevorzugt handelt es sich um eine metallisch-dielektrische Hybridbeschichtung.

In einem weiteren Aspekt betrifft die Erfindung auch eine Anordnung mit einer wie oben beschriebenen Ablenkungsvorrichtung, einer Regelung zur Ansteuerung der Ablenkungsvorrichtung und einem Sensor zur Messung des Schwenkwinkels des Spiegels und zur Erzeugung eines Eingangssignals für die Regelung, wobei die Regelung über ein Ausgangssignal den Strom einstellt, der durch die mindestens eine Spule der Vorrichtung fließt, und wobei das Ausgangssignal mit einem Sollwert und einer Transferfunktion des Systems bestimmt wird. Eine bevorzugte Ausführung der erfindungsgemäßen Vorrichtung zeigt eine in guter Näherung lineare Kennlinie, d.h. der Schwenkwinkel des Spiegels und der Wert des Vorgabesignals hängen in guter Näherung linear voneinander ab. Dann können durch die erfindungsgemäße Anordnung mit einer einfachen Regelung, die auf den Prinzipien der linearen Systemtheorie beruht, die Anforderungen der modernen Laserbearbeitung erfüllt werden.

Weitere Vorteile und vorteilhafte Ausgestaltungen des Gegenstands der Erfindung ergeben sich aus der Beschreibung, den Ansprüchen und der Zeichnung. Ebenso können die vorstehend genannten und die noch weiter aufgeführten Merkmale je für sich oder zu mehreren in beliebigen Kombinationen Verwendung finden. Die gezeigten und beschriebenen Ausführungsformen sind nicht als abschließende Aufzählung zu verstehen, sondern haben vielmehr beispielhaften Charakter für die Schilderung der Erfindung.

Bevorzugte Ausführungsbeispiele der Erfindung sind in der Zeichnung schematisch dargestellt und werden nachfolgend mit Bezug zu den Figuren der Zeichnung näher erläutert. Es zeigen:

Fig. 1       eine Längsschnittdarstellung einer ersten erfindungsgemäßen Vorrichtung zur eindimensionalen Ablenkung eines Laserstrahls;

Fig. 2       eine Unteransicht einer zweiten erfindungsgemäßen Vorrichtung zur zweidimensionalen Ablenkung eines Laserstrahls;

Fign. 3a-3i   Querschnitte des Permanentmagneten und der mindestens einen Spule für verschiedene erfindungsgemäße Ausführungsformen; und

Fig. 4       eine Anordnung mit einer erfindungsgemäßen Vorrichtung.

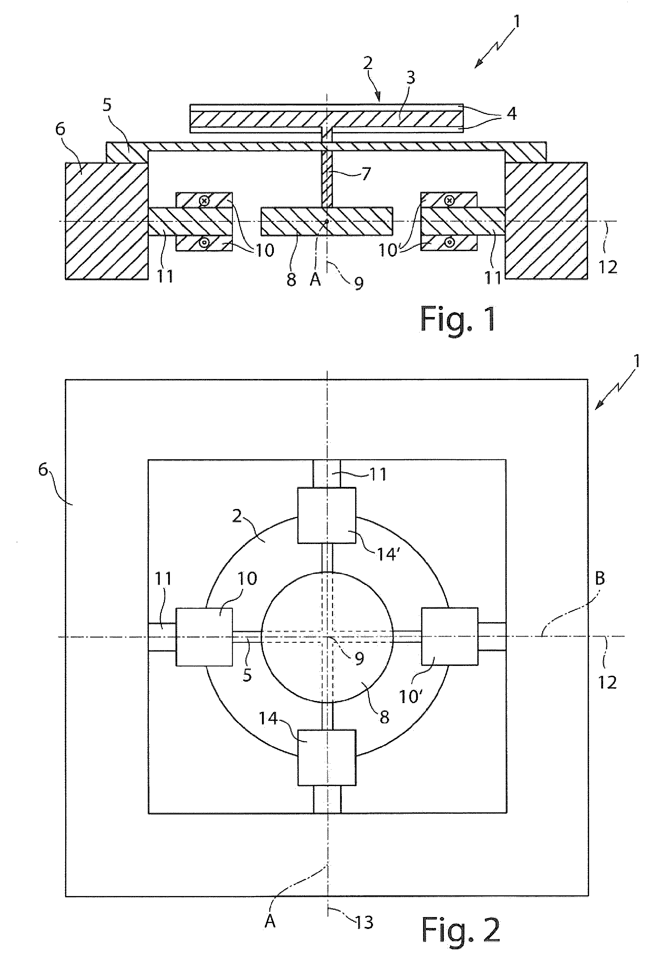

Fig. 1 zeigt eine erfindungsgemäße Vorrichtung 1 zur eindimensionalen Ablenkung eines Laserstrahls mittels eines Spiegels 2, für den auf einem Spiegelsubstrat 3, z.B. aus einem Halbleitermaterial, beidseitig eine reflektierende Beschichtung 4 gleicher Dicke aufgebracht ist. Bei der reflektierenden Beschichtung 4 kann es sich z.B. um eine metallische Schicht, eine dielektrische Schicht oder eine metallisch-dielektrische Hybridschicht handeln, wobei dies auch Schichtstapel oder Schichtsysteme einschließt. Der Spiegel 2 ist an der Oberseite eines Verbindungselements 5 befestigt, welches wie gezeigt als Festkörpergelenk ausgebildet sein kann, und ist dadurch in einem Rahmen 6 um eine Achse A schwenkbar gelagert.

Ein Permanentmagnet 8 ist über einen Abstandshalter 7, z.B. aus einem nichtferromagnetischen Material, mit der Unterseite des Verbindungselements 5 verbunden und dadurch auch mit dem auf dem Verbindungselement 5 angeordneten Spiegel 2 starr verbunden. Der Permanentmagnet 8 ist als Zylinder mit einem Nordpol und einem Südpol ausgebildet, wobei diese Magnetpole auf der Zylinderoberseite und -unterseite angeordnet sind und eine Magnetachse **9** definieren, die mit der Zylinderachse bzw. der Symmetrieachse des Permanentmagneten 8 zusammenfällt. Der Permanentmagnet kann auch andere Geometrien aufweisen.

Der Permanentmagnet 8 ist zwischen zwei Spulen **10**, **10**' angeordnet, die jeweils über einen Spulenkern **11** (z.B. aus einem nichtferromagnetischen Material) starr mit dem Rahmen 6 verbunden sind und eine gemeinsame Wickelachse **12** besitzen, um welche die Spulenwindungen gewickelt sind. Bezogen auf einen Stromfluss in den Spulen 10, 10' weisen sie eine gleichsinnige Wicklungsrichtung auf. Die Magnetachse 9 und die Wickelachse 12 verlaufen nicht parallel, sondern schneiden sich unter einem von Null verschiedenen Winkel, nämlich in Fig. 1 lediglich beispielhaft unter einem Winkel von 90°. Die Länge des Abstandshalters 7 bestimmt den Abstand zwischen dem Mittelpunkt des Permanentmagneten 8 und der Wickelachse 12. Fließt in den Spulen 10, 10' Strom, ist der Permanentmagnet 8 in dem von den Spulen erzeugten Magnetfeld angeordnet und wird dadurch gegen die Rückstellkraft des Verbindungselements 5 um die Achse A ausgelenkt. Entsprechend wird der mit dem Permanentmagneten 8 starr verbundene Spiegel 2 eindimensional abgelenkt.

Verlustwärme, z.B. aufgrund des Ohmschen Widerstands der Spulen 10, 10', wird über den Kontakt der Spulenkerne 11 zum Rahmen 6 abgeführt. Dazu sind Spulenkerne 11 aus Material mit einer hohen Wärmeleitfähigkeit, z.B. Aluminiumlegierungen, Aluminium-Oxid oder Aluminium-Nitrid, besonders geeignet.

**Fig. 2** zeigt eine erfindungsgemäße Vorrichtung **1** zur zweidimensionalen Ablenkung eines Laserstrahls mittels eines Spiegels 2, der an der Oberseite eines kreuzförmigen Verbindungselements 5 befestigt ist, welches wie gezeigt als Festkörpergelenk ausgebildet sein kann und in dem Rahmen 6 um zwei zueinander rechtwinklige Achse A, B schwenkbar gelagert ist. Anstelle des gezeigten kreuzförmigen Verbindungselementes können auch andere Ausführungsformen verwendet werden, beispielsweise eine als Festkörpergelenk ausgeführte Membranfeder mit spiralartig geschwungenen Speichen.

Der Permanentmagnet 8 ist zwischen zwei Spulenpaaren 10, 10' und **14**, **14'** angeordnet, die jeweils über einen Spulenkern 11 (z.B. aus einem nichtferromagnetischen Material) starr mit dem Rahmen 6 verbunden sind. Jedes Spulenpaar besitzt eine gemeinsame Wickelachse 12, 13, um welche die Spulenwindungen gewickelt sind. Bezogen auf einen Stromfluss in einem Spulenpaar weisen die Spulen jedes Spulenpaars eine gleichsinnige Wicklungsrichtung auf. Die beiden Wickelachsen 12, 13 sind nicht kollinear, sondern stehen zueinander und zu der Magnetachse 9 des Permanentmagneten 8 jeweils senkrecht. Fließt in den Spulen 10, 10' und 14, 14' Strom, ist der Permanentmagnet 8 jeweils in dem von den Spulen erzeugten Magnetfeld angeordnet und wird dadurch gegen die Rückstellkraft des Verbindungselements 5 um die Achsen A, B ausgefenkt. Die Auslenkung des mit dem Permanentmagneten 8 starr verbundenen Spiegels ergibt sich entsprechend aus der Überlagerung der Auslenkung um die Achsen A, B.

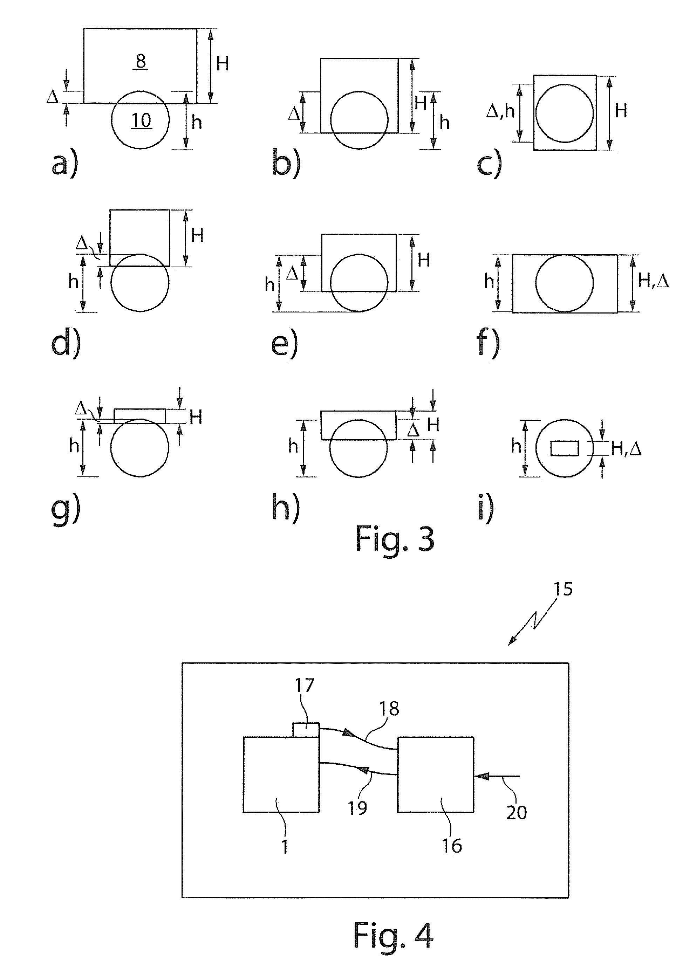

Fign. 3a-3i zeigen verschiedene Querschnitte des Permanentmagneten 8 und der Spule 10 für verschiedene erfindungsgemäße Ausführungsformen, wobei unter dem Querschnitt ein Schnitt senkrecht zur zugehörigen Wickelachse 12 verstanden werden soll. Unter der Höhe des Querschnitts wird die maximale Erstreckung des Querschnitts in der Richtung senkrecht zur Schwenkachse A des Spiegels 2 und zur Wickelachse 12 verstanden. Diese Definitionen beziehen sich jeweils auf die Ruhelage des Permanentmagneten 8, also auf den Zustand, wenn kein Strom durch die Spule 10 fließt.

**Fig. 3a** zeigt eine erfindungsgemäße Ausführungsform, bei der die Höhe H des Querschnitts des Permanentmagneten 8 kleiner als die doppelte Höhe h des Spulenquerschnitts ist und die Querschnitte von Permanentmagnet 8 und Spule 10 teilweise überlappen.

**Fig. 3b** zeigt eine erfindungsgemäße Ausführungsform, bei der die Höhe H des Querschnitts des Permanentmagneten 8 kleiner als die doppelte Höhe h des Spulenquerschnitts ist und der Höhenüberlapp Δ der Querschnitte von Permanentmagnet 8 und Spule 10 größer als oder gleich 50% der Höhe h des Querschnitts der Spule 10 ist.

**Fig. 3c** zeigt eine erfindungsgemäße Ausführungsform, bei der die Höhe H des Querschnitts des Permanentmagneten 8 kleiner als die doppelte Höhe h des Spulenquerschnitts ist und der Höhenüberlapp Δ der Querschnitte von Permanentmagnet 8 und Spule 10 gleich der Höhe h des Querschnitts der Spule 10 ist.

**Fig. 3d** zeigt eine erfindungsgemäße Ausführungsform, bei der die Höhe H des Querschnitts des Permanentmagneten 8 zwischen 0,9-mal und 1,1-mal der Höhe h des Spulenquerschnitts ist, insbesondere gleich der Höhe h des Spulenquerschnitts ist, und die Querschnitte von Permanentmagnet 8 und Spule 10 teilweise überlappen.

**Fig. 3e** zeigt eine erfindungsgemäße Ausführungsform, bei der die Höhe H des Querschnitts des Permanentmagneten 8 zwischen 0,9-mal und 1,1-mal der Höhe h des Spulenquerschnitts ist, insbesondere gleich der Höhe des Spulenquerschnitts ist, und der Höhenüberlapp Δ der Querschnitte von Permanentmagnet 8 und Spule 10 größer als oder gleich 50% der kleineren der beiden Höhen h, H ist.

**Fig. 3f** zeigt eine erfindungsgemäße Ausführungsform, bei der die Höhe H des Querschnitts des Permanentmagneten 8 zwischen 0,9-mal und 1,1-mal der Höhe h des Spulenquerschnitts ist, insbesondere gleich der Höhe h des Spulenquerschnitts ist, und der Höhenüberlapp Δ der Querschnitte von Permanentmagnet 8 und Spule 10 gleich 100% der kleineren der beiden Höhen h, H ist.

**Fig. 3g** zeigt eine erfindungsgemäße Ausführungsform, bei der die Höhe H des Querschnitts des Permanentmagneten 8 kleiner als die Höhe h des Spulenquerschnitts ist und die Querschnitte von Permanentmagneten 8 und Spule 10 teilweise überlappen.

**Fig. 3h** zeigt eine erfindungsgemäße Ausführungsform, bei der die Höhe H des Querschnitts des Permanentmagneten 8 kleiner als die Höhe h des Spulenquerschnitts ist und der Höhenüberlapp Δ der Querschnitte von Permanentmagnet 8 und Spule 10 größer oder gleich 50% der Höhe H des Querschnitts des Permanentmagneten 8 ist.

**Fig. 3i** zeigt eine erfindungsgemäße Ausführungsform, bei der die Höhe H des Querschnitts des Permanentmagneten 8 kleiner als die Höhe h des Spulenquerschnitts ist und der Höhenüberlapp Δ der Querschnitte von Permanentmagnet 8 und Spule 10 gleich der Höhe H des Permanentmagneten 8 ist. Im Unterschied zu

Fig. 3h liegt der Querschnitt des Permanentmagneten 8 vollständig innerhalb des Querschnitts der Spule 10.

**Fig. 4** zeigt eine Anordnung **15** mit der Ablenkungsvorrichtung 1, einer Regelung **16** zur Ansteuerung der Ablenkungsvorrichtung 1 und einem Sensor **17** zur Messung des Schwenkwinkels des Spiegels 2. Der Sensor 17 erzeugt ein Eingangssignal **18** für die Regelung 16, wobei die Regelung 16 über ein Ausgangssignal **19** den Strom einstellt, der durch die mindestens eine Spule der Ablenkungsvorrichtung 1 fließt. Dabei wird das Ausgangssignal 19 mit einem Sollwert **20** und einer Transferfunktion des Systems bestimmt, wobei die Transferfunktion einen Zusammenhang zwischen Ein- und Ausgangssignal des offenen Regelkreises wiedergibt.

**Patentansprüche**

1. Vorrichtung (1) zur Ablenkung eines Laserstrahls,
   mit einem Spiegel (2),
   mit einem Rahmen (6), mit dem der Spiegel (2) schwenkbar verbunden ist, mit einem Permanentmagneten (8), der starr mit dem Spiegel (2) verbunden ist und dessen Nord- und Südpol eine Magnetachse (9) definieren, und mit mindestens einer Spule (10; 10'; 14; 14') zur Ausübung einer magnetischen Auslenkkraft auf den Permanentmagneten (8), die eine Wickelachse (12; 13) aufweist, um die die Spulenwindungen gewickelt sind, wobei die Spule (10; 10'; 14; 14') starr mit dem Rahmen (6) verbunden und der Permanentmagnet (8) im Magnetfeld der Spule (10; 10'; 14; 14') angeordnet ist,
   **dadurch gekennzeichnet,**
   **dass** die Magnetachse (9) und die Wickelachse (12; 13) der Spule (10; 10'; 14; 14') nicht parallel verlaufen, die Höhe (H) des Querschnitts des Permanentmagneten (8) kleiner oder gleich der doppelten Höhe (h) des Spulenquerschnitts ist und sich die Querschnitte von Permanentmagnet (8) und Spule (10; 10'; 14; 14') zumindest teilweise überlappen.

2. Vorrichtung nach Anspruch 1, **dadurch gekennzeichnet, dass** sich die Magnetachse (9) und die Wickelachse (12; 13) schneiden und einen von Null verschiedenen Winkel miteinander einschließen.

3. Vorrichtung nach Anspruch 2, **dadurch gekennzeichnet, dass** der von Null verschiedene Winkel 90° beträgt.

4. Vorrichtung nach einem der vorhergehenden Ansprüche, **dadurch gekennzeichnet, dass** die Höhe (H) des Querschnitts des Permanentmagneten (8) zwischen 0,9-mal und 1,1-mal der Höhe (h) des Spulenquerschnitts ist, insbesondere gleich der Höhe (h) des Spulenquerschnitts ist.

5. Vorrichtung nach einem der Ansprüche 1 bis 3, **dadurch gekennzeichnet, dass** die Höhe (H) des Querschnits des Permanentmagneten (8) kleiner als die Höhe (h) des Spulenquerschnitts ist.

6. Vorrichtung nach einem der vorhergehenden Ansprüche, **dadurch gekennzeichnet, dass** der Höhenüberlapp ($\Delta$) der Querschnitte von Permanentmagnet (8) und Spule (10; 10'; 14; 14') größer als oder gleich 50% der kleineren der beiden Höhen (h, H) ist.

7. Vorrichtung nach Anspruch 6, **dadurch gekennzeichnet, dass** der Höhenüberlapp ($\Delta$) der Querschnitte von Permanentmagnet (8) und Spule (10; 10'; 14; 14') gleich 100% der kleineren der beiden Höhen (h, H) ist.

8. Vorrichtung nach einem der vorhergehenden Ansprüche, **dadurch gekennzeichnet, dass** der Spiegel (2) am Rahmen (6) mittels eines Verbindungselements (5) schwenkbar gelagert ist und dass zwischen dem Permanentmagneten (8) und dem Verbindungselement (5) ein Abstandshalter (7) angeordnet ist, dessen Länge den Abstand zwischen dem Mittelpunkt des Permanentmagneten (8) und der Wickelachse (12; 13) der mindestens einen Spule (10; 10'; 14; 14') definiert.

9. Vorrichtung nach einem der vorhergehenden Ansprüche, **dadurch gekennzeichnet, dass** die Vorrichtung mehrere Spulen (10; 10'; 14; 14') mit jeweils einer Wickelachse (12, 13) umfasst.

10. Vorrichtung nach Anspruch 9, **dadurch gekennzeichnet, dass** auf einer Wickelachse (12; 13) mindestens zwei Spulen (10, 10'; 14, 14') mit gleichsinniger Polung des erzeugbaren Magnetfeldes vorgesehen sind und der Permanentmagnet (8) zwischen den mindestens zwei Spulen (10, 10'; 14, 14') angeordnet ist.

11. Vorrichtung nach Anspruch 9 oder 10, **dadurch gekennzeichnet, dass** die Vorrichtung zwei Wickelachsen (12, 13) mit Spulen (10; 10'; 14; 14') umfasst, die zueinander und zu der Magnetachse (9) senkrecht stehen.

12. Vorrichtung nach Anspruch 9, **dadurch gekennzeichnet, dass** die Wickelachsen (12, 13) der Spulen (10; 10'; 14; 14') nicht kollinear sind.

13. Vorrichtung nach einem der vorhergehenden Ansprüche, **dadurch gekennzeichnet, dass** die mindestens eine Spule (10; 10'; 14; 14') einen Spulenkern (11) aus einem nichtferromagnetischen Material aufweist.

14. Vorrichtung nach Anspruch 13, **dadurch gekennzeichnet, dass** der Spulenkern (11) der mindestens einen Spule (10; 10'; 14; 14') aus einer Kupferlegierung, einer Aluminiumlegierung, aus Aluminium-Oxid oder aus Aluminium-Nitrid besteht.

15. Vorrichtung nach einem der vorhergehenden Ansprüche, **dadurch gekennzeichnet, dass** der Spiegel (2) beidseitig mit einer metallischdielektrischen Hybridbeschichtung gleicher Dicke versehen ist.

16. Anordnung (15) mit einer Ablenkungsvorrichtung (1) nach einem der vorhergehenden Ansprüche, einer Regelung (16) zur Ansteuerung der Vorrichtung (1) und einem Sensor (17) zur Messung des Schwenkwinkels des Spiegels (2) und zur Erzeugung eines Eingangssignals (18) für die Regelung (16), wobei die Regelung (16) über ein Ausgangssignal (19) den Strom einstellt, der durch die mindestens eine Spule (10; 10'; 14; 14') der Ablenkungsvorrichtung (1) fließt und wobei das Ausgangssignal (19) mit einem Sollwert und einer Transferfunktion des Systems bestimmt wird.

Fig. 1

Fig. 2

a)   b)   c)

d)   e)   f)

g)   h)   i)

Fig. 3

Fig. 4

Europäisches
Patentamt

European
Patent Office

Office européen
des brevets

**EUROPÄISCHER RECHERCHENBERICHT**

Nummer der Anmeldung

EP 15 17 5387

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | US 4 100 576 A (DITTHARDT ALFRED R) 11. Juli 1978 (1978-07-11) * Abbildungen 1-7 * ----- | 1-12 | INV. G02B26/08 G02B7/182 |
| X | US 2014/177020 A1 (HINO MAKIKO [JP] ET AL) 26. Juni 2014 (2014-06-26) * Abbildungen 1A,1B * ----- | 1-7 | |
| X | DE 12 13 141 B (LEITZ ERNST GMBH) 24. März 1966 (1966-03-24) * Abbildung 1 * ----- | 1-12 | |
| X | EP 2 708 308 A1 (TRUMPF LASER MARKING SYSTEMS AG [CH]) 19. März 2014 (2014-03-19) * Absätze [0013] - [0026]; Abbildungen 1-5 * ----- | 1-12 | |
| X | JP 2004 191918 A (VICTOR COMPANY OF JAPAN) 8. Juli 2004 (2004-07-08) * Abbildungen 5-8 * ----- | 1-12 | RECHERCHIERTE SACHGEBIETE (IPC) |
| X | US 2004/190097 A1 (SHPIZEL MATVEY B [US] ET AL) 30. September 2004 (2004-09-30) * Abbildungen 1-3 * ----- | 1-7 | G02B |

~~Der vorliegende Recherchenbericht wurde für alle Patentans~~prüche erstellt

| Recherchenort | Abschlußdatum der Recherche | Prüfer |
|---|---|---|
| München | 7. Dezember 2015 | Baur, Christoph |

KATEGORIE DER GENANNTEN DOKUMENTE

X : von besonderer Bedeutung allein betrachtet
Y : von besonderer Bedeutung in Verbindung mit einer
    anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
    nach dem Anmeldedatum veröffentlicht worden ist
D : in der Anmeldung angeführtes Dokument
L : aus anderen Gründen angeführtes Dokument

.................................................................

& : Mitglied der gleichen Patentfamilie, übereinstimmendes
    Dokument

EPO FORM 1503 03.82 (P04C03)

Europäisches
Patentamt

European
Patent Office

Office européen
des brevets

Nummer der Anmeldung

EP 15 17 5387

## GEBÜHRENPFLICHTIGE PATENTANSPRÜCHE

Die vorliegende europäische Patentanmeldung enthielt bei ihrer Einreichung Patentansprüche, für die eine Zahlung fällig war.

☐ Nur ein Teil der Anspruchsgebühren wurde innerhalb der vorgeschriebenen Frist entrichtet. Der vorliegende europäische Recherchenbericht wurde für jene Patentansprüche erstellt, für die keine Zahlung fällig war, sowie für die Patentansprüche, für die Anspruchsgebühren entrichtet wurden, nämlich Patentansprüche:

☐ Keine der Anspruchsgebühren wurde innerhalb der vorgeschriebenen Frist entrichtet. Der vorliegende europäische Recherchenbericht wurde für die Patentansprüche erstellt, für die keine Zahlung fällig war.

## MANGELNDE EINHEITLICHKEIT DER ERFINDUNG

Nach Auffassung der Recherchenabteilung entspricht die vorliegende europäische Patentanmeldung nicht den Anforderungen an die Einheitlichkeit der Erfindung und enthält mehrere Erfindungen oder Gruppen von Erfindungen, nämlich:

Siehe Ergänzungsblatt B

☐ Alle weiteren Recherchengebühren wurden innerhalb der gesetzten Frist entrichtet. Der vorliegende europäische Recherchenbericht wurde für alle Patentansprüche erstellt.

☐ Da für alle recherchierbaren Ansprüche die Recherche ohne einen Arbeitsaufwand durchgeführt werden konnte, der eine zusätzliche Recherchengebühr gerechtfertigt hätte, hat die Recherchenabteilung nicht zur Zahlung einer solchen Gebühr aufgefordert.

☐ Nur ein Teil der weiteren Recherchengebühren wurde innerhalb der gesetzten Frist entrichtet. Der vorliegende europäische Recherchenbericht wurde für die Teile der Anmeldung erstellt, die sich auf Erfindungen beziehen, für die Recherchengebühren entrichtet worden sind, nämlich Patentansprüche:

☒ Keine der weiteren Recherchengebühren wurde innerhalb der gesetzten Frist entrichtet. Der vorliegende europäische Recherchenbericht wurde für die Teile der Anmeldung erstellt, die sich auf die zuerst in den Patentansprüchen erwähnte Erfindung beziehen, nämlich Patentansprüche:

1-12

☐ Der vorliegende ergänzende europäische Recherchenbericht wurde für die Teile der Anmeldung erstellt, die sich auf die zuerst in den Patentansprüchen erwähnte Erfindung beziehen (Regel 164 (1) EPÜ).

Europäisches
Patentamt

European
Patent Office

Office européen
des brevets

**MANGELNDE EINHEITLICHKEIT
DER ERFINDUNG
ERGÄNZUNGSBLATT B**

**Nummer der Anmeldung**

EP 15 17 5387

Nach Auffassung der Recherchenabteilung entspricht die vorliegende europäische Patentanmeldung nicht den Anforderungen an die Einheitlichkeit der Erfindung und enthält mehrere Erfindungen oder Gruppen von Erfindungen, nämlich:

1. Ansprüche: 1-12

    Schwenkspiegel mit Abstandhalter
    ---

2. Ansprüche: 13, 14

    Schwenkspiegel mit nicht-ferromagnetischem Spulenkern
    ---

3. Anspruch: 15

    Schwenkspiegel mit beidseitiger Hybridbeschichtung
    ---

4. Anspruch: 16

    Anordnung mit Schwenkspiegel und Sensor zur Messung des Schwenkwinkels
    ---

**ANHANG ZUM EUROPÄISCHEN RECHERCHENBERICHT
ÜBER DIE EUROPÄISCHE PATENTANMELDUNG NR.**   EP 15 17 5387

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

07-12-2015

| Im Recherchenbericht angeführtes Patentdokument | Datum der Veröffentlichung | Mitglied(er) der Patentfamilie | Datum der Veröffentlichung |
|---|---|---|---|
| US 4100576 A | 11-07-1978 | DE 2718532 A1<br>FR 2349911 A1<br>JP S52155008 A<br>US 4100576 A | 10-11-1977<br>25-11-1977<br>23-12-1977<br>11-07-1978 |
| US 2014177020 A1 | 26-06-2014 | JP 2014123020 A<br>US 2014177020 A1 | 03-07-2014<br>26-06-2014 |
| DE 1213141 B | 24-03-1966 | KEINE | |
| EP 2708308 A1 | 19-03-2014 | CN 104812520 A<br>EP 2708308 A1<br>EP 2895294 A1<br>JP 2015533652 A<br>KR 20150067192 A<br>US 2015185472 A1<br>WO 2014041134 A1 | 29-07-2015<br>19-03-2014<br>22-07-2015<br>26-11-2015<br>17-06-2015<br>02-07-2015<br>20-03-2014 |
| JP 2004191918 A | 08-07-2004 | JP 4380233 B2<br>JP 2004191918 A | 09-12-2009<br>08-07-2004 |
| US 2004190097 A1 | 30-09-2004 | KEINE | |

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Nicht-Patentliteratur**

- **ATAMAN et al.** *J. Micromech. Microeng.,* 2003, vol. 23, 025002

- **T. ISEKI et al.** *OPTICAL REVIEW,* 2006, vol. 13 (4), 189-194